(19) 

Europäisches
Patentamt
European
Patent Office
Office européen
des brevets

(11) **EP 4 316 715 A1**

(12) **EUROPEAN PATENT APPLICATION**
published in accordance with Art. 153(4) EPC

(43) Date of publication:
**07.02.2024 Bulletin 2024/06**

(21) Application number: **22780683.3**

(22) Date of filing: **28.03.2022**

(51) International Patent Classification (IPC):
**B23H 7/02** (2006.01)        **G06N 20/00** (2019.01)

(52) Cooperative Patent Classification (CPC):
**B23H 7/02; G06N 20/00**

(86) International application number:
**PCT/JP2022/014821**

(87) International publication number:
**WO 2022/210472 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021  JP 2021055159**

(71) Applicant: **FANUC CORPORATION**
**Oshino-mura**
**Minamitsuru-gun**
**Yamanashi 401-0597 (JP)**

(72) Inventor: **HADA, Keita**
**Minamitsuru-gun, Yamanashi 401-0597 (JP)**

(74) Representative: **Haseltine Lake Kempner LLP**
**Bürkleinstrasse 10**
**80538 München (DE)**

(54) **MACHINING CONDITION ADJUSTMENT DEVICE**

(57)    A machining condition adjustment device includes a simulation unit that performs a simulation of a wire electric discharge machine based on a predetermined machining content, a required specification, and a predetermined machining condition, an update unit that updates a calculation model of the simulation unit, and a calculation unit that calculates a machining state in the simulation. In a predetermined machining state, a model obtained by learning, by machine learning, an adjustment action of the machining state suitable for bringing the machining state close to a reference value of the machining state under the reference condition is stored, an adjustment action of a machining state using the stored model is predicted, and a machining condition to be used for simulation processing is adjusted based on the prediction.

FIG. 1

**Description**

Technical Field

The present invention relates to a machining condition adjustment device and more particularly to a machining condition adjustment device that adjusts a machining condition of a wire electric discharge machine.

Background Art

When machining is performed by a wire electric discharge machine, machining is performed by using machining conditions (voltage waveform, voltage polarity, current waveform, discharge time, pause time, machining fluid amount, machining fluid pressure, wire tension, wire feed control, and the like) prepared in accordance with machining contents (workpiece material, workpiece thickness, machining shape, step of workpiece, and surrounding environment, and the like) and required specifications (machining speed, wire breakage frequency, straightness accuracy, surface roughness, shape error, and the like). The manufacturer performs actual machining many times while changing the machining conditions of the wire electric discharge machine, obtains machining conditions considered to be appropriate for each combination of machining contents and required specifications, and sets the machining conditions as "reference conditions". However, the output machining state data (machining voltage, machining current, machining speed, and the like) may deviate from an unintentionally assumed value due to an individual difference or aged deterioration of the machine. Therefore, at the manufacturing site, it is necessary to adjust the machining conditions presented by the manufacturer while evaluating the actual machining result.

As a technique related to adjustment of machining conditions in the related art, for example, Patent Literature 1 discloses a technique of adjusting a machining condition to a machining condition under which a reference value is output, by acquiring machining state data (machining voltage, machining current, machining speed, and the like) while actually performing machining and performing reinforcement learning for giving a positive reward when the machining state data approaches the reference value with a value of the machining state data assumed to be originally output under a set reference condition as the reference value.

Citation List

Patent Literature

Patent Literature 1: JP 2017-042882 A

Summary of Invention

Technical Problem

Such adjustment work needs to be performed by a skilled worker, or in some cases, it is required to call an engineer of a manufacturer.

In addition, an adjustment work of the machining conditions becomes easy by using the technique described in Patent Literature 1, but it is required to perform actual machining while changing the machining conditions according to the machining contents and required specifications. However, a workpiece subjected to actual machining for adjustment of machining conditions cannot be used as a product. In particular, in the case of an expensive workpiece, the cost becomes large.

Therefore, there is a demand for a technique that enables general workers to perform an adjustment work of machining conditions with less actual machining.

Solution to Problem

A machining condition adjustment device according to the present invention solves the above problem by calculating machining state data indicating a machining state based on a machining condition after adjustment by using a simulation technique when adjusting the machining condition. The machining condition adjustment device according to the present invention performs predetermined test actual machining to update a calculation model used for simulation processing so as to conform to a machine at a site. Then, after the calculation model is updated by the test actual machining, the adjustment work of the machining condition according to the machining content and the required specifications can be performed by simulation without using the machine at the site, that is, without performing the actual machining.

According to one aspect of the present invention, a machining condition adjustment device that adjusts a machining condition in a wire electric discharge machine includes a machining information storage unit that stores data related to a machining content and data related to required specifications; a reference value storage unit that stores, as a reference value, a machining state corresponding to the machining content and the required specification stored in the machining information storage unit and a reference condition that is a predetermined machining condition; a simulation unit that performs a simulation of the wire electric discharge machine based on the machining content and the required specification stored in the machining information storage unit and a predetermined machining condition; a calculation model update unit that updates a calculation model of the simulation unit by inputting a machining state when predetermined machining is performed as a parameter; a machining state calculation unit that calculates a machining state in the simulation based on a result of the simulation by the simulation unit; a model storage unit that stores a model obtained by learning, by machine learning, an adjustment action of a predetermined machining state suitable for bringing the machining state close to the reference value in the machining state; a machining condition prediction unit that predicts an adjustment action of a machining state using the model stored in the model storage unit based on the machining state calculated by the machining state calculation unit; and a machining condition update unit that adjusts the machining condition to be used for simulation processing by the simulation unit based on the adjustment action of the machining state predicted by the machining condition prediction unit.

Advantageous Effects of Invention

According to one aspect of the present invention, in case of the adjustment of the machining conditions to satisfy the machining content and the required specifications input by the operator, the machining conditions can be adjusted with less actual machining by using a simulation technique for acquiring the machining state by the adjusted machining conditions.

Brief Description of Drawings

Fig. 1 is a schematic hardware configuration diagram of a controller according to a first embodiment.
Fig. 2 is a schematic block diagram illustrating functions of the controller according to the first embodiment.

Description of Embodiments

Hereinafter, embodiments of the present invention are described with reference to the drawings.

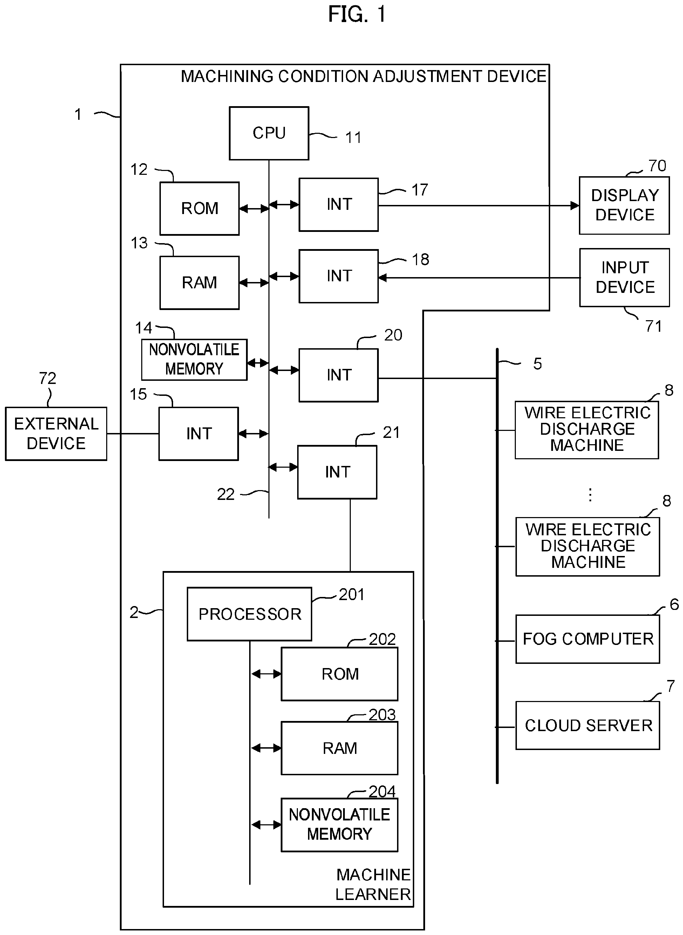

Fig. 1 is a schematic hardware configuration diagram illustrating a main part of a machining condition adjustment device according to an embodiment of the present invention. A machining condition adjustment device 1 of the present invention can be implemented as, for example, a controller that controls a wire electric discharge machine 8, can be implemented as a personal computer provided side by side with the controller, and can also be implemented as a computer such as a fog computer 6 and a cloud server 7. The machining condition adjustment device 1 according to the present embodiment is implemented as a computer connected to the wire electric discharge machine 8 (or a controller that controls the wire electric discharge machine 8) via a wired/wireless network 5.
A CPU 11 included in the machining condition adjustment device 1 according to the present embodiment is a processor that controls the machining condition adjustment device 1 as a whole. The CPU 11 reads a system program stored in a ROM 12 via a bus 22 and controls the entire machining condition adjustment device 1 according to the system program. A RAM 13 temporarily stores temporary calculation data, display data, various data input from the outside, and the like.
A nonvolatile memory 14 includes, for example, a memory or a solid state drive (SSD) that is backed up by a battery (not illustrated), and a storage state is maintained even when the machining condition adjustment device 1 is powered off. The nonvolatile memory 14 stores programs and data read from an external device 72 via an interface 15, programs and data input from an input device 71 via an interface 18, programs and data acquired from other devices such as the fog computer 6 and the cloud server 7 via the network 5, and the like. The data stored in the nonvolatile memory 14 may include, for example, data related to a machining content in the wire electric discharge machine 8, data related to required specifications, and data related to each physical quantity detected by a sensor (not illustrated) attached to the wire electric discharge machine 8. The programs and data stored in the nonvolatile memory 14 may be loaded in the RAM 13 at the time of execution/use. In the ROM 12, various system programs such as a known analysis program are written in advance.
The interface 15 is an interface for connecting the CPU 11 of the machining condition adjustment device 1 to an external device 72 such as an external storage medium. For example, programs, data, and the like used for simulation are read from the external device 72 side. The program, data, and the like edited in the machining condition adjustment device 1 can be stored in an external storage medium (not illustrated) such as a CF card or a USB memory via the external device 72.

An interface 20 is an interface for connecting the CPU of the machining condition adjustment device 1 and the wired or wireless network 5. The network 5 may perform communication by using technologies such as serial communication such as RS-485, Ethernet (registered trademark) communication, optical communication, wireless LAN, Wi-Fi (registered trademark), and Bluetooth (registered trademark). The network 5 is connected to a controller that controls other machines and a higher-level management device such as the fog computer 6 and the cloud server 7 and exchanges data with the machining condition adjustment device 1.

On a display device 70, each data read on the memory, data obtained as a result of execution of a program or the like, and the like are output and displayed via an interface 17. In addition, the input device 71 including a keyboard, a pointing device, and the like passes commands, data, and the like based on a work by a worker to the CPU 11 via the interface 18.

The interface 21 is an interface for connecting the CPU 11 and the machine learner 2. The machine learner 2 includes a processor 201 that controls the entire machine learner 2, a ROM 202 that stores a system program and the like, a RAM 203 that performs temporary storage in each process related to machine learning, and a nonvolatile memory 204 used for storage of a model or the like that has learned a data group to be learned. The machine learner 2 can observe data (for example, data related to machining contents, data related to required specifications, data related to machining conditions, and the like) generated by the machining condition adjustment device 1 via the interface 21. In addition, the machining condition adjustment device 1 acquires a processing result output from the machine learner 2 via the interface 21 and stores the acquired result, displays the acquired result, or transmits the acquired result to another device via the network 5 or the like. The machine learner 2 is built in the machining condition adjustment device 1 in Fig. 1 but may be externally connected to the machining condition adjustment device 1 via a predetermined interface.

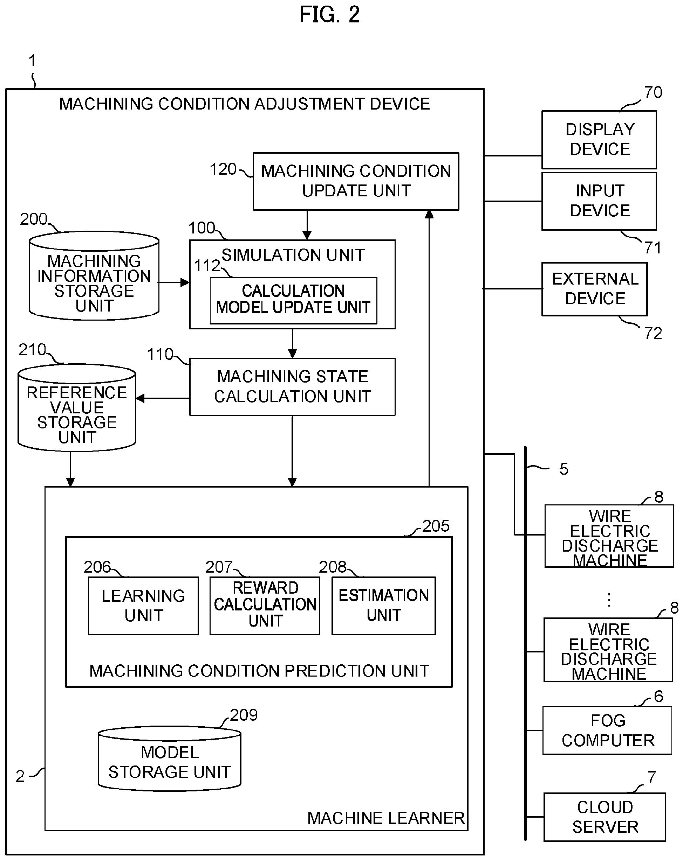

Fig. 2 is a schematic block diagram illustrating functions of the machining condition adjustment device 1 according to the embodiment of the present invention. The functions of the machining condition adjustment device 1 according to the present embodiment are implemented by causing the CPU 11 included in the machining condition adjustment device 1 illustrated in Fig. 1 and the processor 201 included in the machine learner 2 to execute system programs and control the operations of the respective units of the machining condition adjustment device 1 and the machine learner 2.

The machining condition adjustment device 1 according to the present embodiment includes a simulation unit 100, a machining state calculation unit 110, and a machining condition update unit 120. The simulation unit 100 includes a calculation model update unit 112. In addition, the machine learner 2 includes a machining condition prediction unit 205. Furthermore, the RAM 13 to the nonvolatile memory 14 of the machining condition adjustment device 1 are provided with a machining information storage unit 200, which is an area for storing data related to predetermined machining contents and data related to required specifications, and a reference value storage unit 210, which is an area for storing a reference value, which is data related to a machining state observed when a reference condition is set as a machining condition, and in the RAM 203 to the nonvolatile memory 204 of the machine learner 2, a model storage unit 209 is prepared in advance as an area for storing a model generated in the machining condition prediction unit 205.

The simulation unit 100 is implemented by execution of the system program read from the ROM 12 by the CPU 11 included in the machining condition adjustment device 1 illustrated in Fig. 1 and mainly performing arithmetic processing using the RAM 13 and the nonvolatile memory 14 by the CPU 11. The simulation unit 100 performs simulation of the wire electric discharge machine based on the data related to the machining content, the data related to the required specifications stored in the machining information storage unit 200, and data related to the initial machining conditions (reference conditions) set by the worker. The simulation unit 100 sequentially outputs the machining state during the simulation as a result of the simulation. For the simulation of the wire electric discharge machine performed by the simulation unit 100, for example, known methods disclosed in JP 2002-160127 A and "Simulation of Electrical Discharge Machining" by Kunieda Masanori in Journal of The Japan Society for Precision Engineering, Vol. 76, No. 8, 2010, pp. 861 to 866", or the like may be used.

The calculation model update unit 112 updates the calculation model used for the simulation processing by the simulation unit 100. When the calculation model is updated, test actual machining is performed. The test actual machining is performed by executing a test machining program. The test machining program is generated in advance by a manufacturer or the like to cause a machine to perform a predetermined machining operation. The test actual machining is a simple operation of installing a test workpiece at a predetermined position and executing a test machining program. Therefore, the test actual machining can also be performed by a general worker. In the test actual machining, for example, a test workpiece is installed in the wire electric discharge machine at the site, and predetermined machining is performed at a plurality of predetermined points along a path including movement in the positive direction and the negative direction of each axis. At this time, machining is performed while setting a plurality of predetermined conditions for the machining power supply. Then, data indicating a machining state such as a moving speed, the number of times of discharge, the number of times of occurrence of short circuit, and the number of times of wire breakage at the time of each machining is acquired. Thereafter, the parameters of the calculation model used in the simulation processing are operated based on the acquired data indicating the machining state. When the parameters of the calculation model are operated, for example, simulation processing based on the test machining program is executed by using the initial calculation model, and data indicating a machining state obtained from the simulation processing is used as basic data. An operation of correcting the parameter of the calculation model may be performed based on the difference between the basic data and the data indicating the machining state obtained from the wire electric discharge machine at the site. Then, the calculation model is updated with the calculated parameters. Even in other types of machines, the calculation model used for the simulation processing can be updated based on the basic data indicating the machining state acquired by performing actual machining on at least one workpiece under a plurality of conditions. After the calculation model used in the simulation processing is updated in this manner, the machining condition adjustment work according to the machining content and the required specifications can be performed by using the updated calculation model.

The machining state calculation unit 110 is implemented by execution of the system program read from the ROM 12 by the CPU 11 included in the machining condition adjustment device 1 illustrated in Fig. 1 and mainly performing arithmetic processing using the RAM 13 and the nonvolatile memory 14 by the CPU 11. The machining state calculation unit 110 calculates and outputs data related to the machining state such as the machining voltage, the machining current, the machining speed, the number of times of electrical discharge, the amount of machining fluid, the machining fluid pressure, the presence or absence of short circuit, and the presence or absence of wire breakage based on the result of the simulation by the simulation unit 100. In addition, in response to an instruction from the worker, the machining state calculation unit 110 stores, in the reference value storage unit 210, data related to the machining state calculated based on the result of the simulation performed in the simulation unit 100 in a state where the reference condition is set as the machining condition, as a reference value.

The machining condition prediction unit 205 is implemented by causing the processor 201 included in the machine learner 2 illustrated in Fig. 1 to execute a system program read from the ROM 202 and causing the processor 201 mainly to perform arithmetic processing using the RAM 203 and the nonvolatile memory 204. The machining condition prediction unit 205 performs machine learning processing based on the data related to the machining state output from the machining state calculation unit 110 and the reference value stored in the reference value storage unit 210, and predicts a machining condition considered to be suitable for the current machining state. The machining condition prediction unit 205 predicts machining conditions by mainly using a known reinforcement learning technique. The machining condition prediction unit 205 includes a learning unit 206, a reward calculation unit 207, and an estimation unit 208.

Based on the data related to the machining state calculated by the machining state calculation unit 110 and the reference value stored in the reference value storage unit 210, the learning unit 206 executes reinforcement learning for learning whether the result of an adjustment action $a_i$ for the predetermined machining condition is good or bad, when a machining state $s_i$ at a predetermined time point $t_i$ is observed. As the adjustment action $a_i$ of the machining condition, for example, a predetermined variable set in advance may be added to each item of the machining condition. In the machining condition adjustment device 1 according to the embodiment, the adjustment action of the machining condition is used as parameters for the simulation operation of the wire electric discharge machine by the simulation unit 100. Basically, in the simulation, it is also possible to set a machining condition with which actual machining can not be performed due to the specifications of the actual machine. Therefore, the adjustment action $a_i$ of the machining condition learned by the learning unit 206 may adjust the machining condition beyond a range of a general setting value or a range of a combination.

For a state of a learning target at a predetermined time point, the learning unit 206 may learn whether a result in a case where a predetermined action is executed is good or bad, as a function indicating a total of rewards r obtained by taking the action. By repeating the learning cycle of the reinforcement learning in a trial and error manner, a measure (the adjustment action of the machining condition with respect to the machining state of the wire electric discharge machine) is learned such that the total sum of the rewards r is maximized. Examples of the reinforcement learning method include Q-learning. In this case, the learning unit 206 generates, as a model, an action value function Q that returns a value of taking the adjustment action $a_i$ in the state of the machining state $s_i$. The action value function Q is expressed as a function using a state and an action as arguments and is updated based on a reward obtained for an action in a certain state, a value of an action in a future state shifted by the action, and the like in learning during repetition of the action. The update formula of the action value function is defined according to the reinforcement learning algorithm, and for example, in Q learning which is one of representative reinforcement learning algorithms, the action value function is defined by Expression 1 below. In Expression 1, $\alpha$ is called a learning coefficient, $\gamma$ is called a discount rate, and $\alpha$ and $\gamma$ are defined in a range of $0 < \alpha \leq 1$ and $0 < \gamma \leq 1$. Note that the learning unit 206 is not necessarily an essential configuration when the model has been sufficiently learned.

[Expression 1]

$$Q(s_t, a_t) \leftarrow Q(s_t, a_t) + \alpha \left( r_{t+1} + \gamma \max_a Q(s_{t+1}, a) - Q(s_t, a_t) \right)$$

When the machining state $s_i$ at a predetermined time point $t_i$ is observed, the reward calculation unit 207 calculates, as a reward $r_i$, whether a result of taking the adjustment action $a_i$ under a predetermined machining condition is good or bad. If a state is transitioned to a machining state $s_{i+1}$ as a result of the adjustment action $a_i$ when the machining state $s_i$ is observed, the reward calculation unit 207 calculates a high reward according to how close the data related to each machining state in the machining state $s_{i+1}$ is to the reference value stored in the reference value storage unit 210. For example, a rule for reward calculation may be provided such that a high reward can be obtained when the distance when the data related to each machining state in the machining state $s_{i+1}$ and the reference value are expressed by vectors is close to 0, and the reward calculation unit 207 may calculate the reward based on the rule. The reward r calculated by the reward calculation unit 207 is output to the learning unit 206 and used for learning.

The estimation unit 208 estimates the adjustment action in the wire electric discharge machine using the model stored in the model storage unit 209 based on the data related to the machining state calculated by the machining state calculation unit 110. If the data related to the machining state calculated by the machining state calculation unit 110 is observed as the machining state $s_i$, the estimation unit 208 calculates a reward for each of a plurality of adjustment actions $a_j$ (j is 1 to n) of the machining condition that can be currently taken, by using a model generated by reinforcement learning by the learning unit 206, and estimates the adjustment action $a_j$ of the machining condition for which the largest reward is calculated as a solution that matches the current situation. The adjustment action of the machining condition estimated by the estimation unit 208 is output to the machining condition update unit 120.

Note that while learning by the learning unit 206 is being performed, the estimation unit 208 may select a random action a with a certain probability for the purpose of developing learning ($\varepsilon$ greedy method). In particular, in the present invention, the machining state is determined based on the result of the simulation without performing actual machining using the wire electric discharge machine. Therefore, the machining condition adjustment device according to the present invention can be used to derive a good machining condition outside the machine specification or a good machining condition that is not assumed by a person by selecting a random action a with a high probability particularly at the beginning of learning.

The machining condition update unit 120 is implemented by execution of the system program read from the ROM 12 by the CPU 11 included in the machining condition adjustment device 1 illustrated in Fig. 1 and mainly performing arithmetic processing using the RAM 13 and the nonvolatile memory 14 by the CPU 11. The machining condition update unit 120 updates the machining condition in the simulation unit 100 by applying the adjustment action a of the machining condition predicted by the machining condition prediction unit 205 to the machining condition in the simulation performed in the simulation unit 100.

A machining condition adjustment device 1 according to the present embodiment including the configuration calculates machining state data indicating a machining state based on a machining condition after adjustment by using a simulation technique when adjusting the machining condition. Therefore, it is possible to adjust the machining conditions according to the machining content and the required specifications without performing actual machining except when the simulation model is first updated. Since it is not necessary to perform actual machining and the machining conditions can be adjusted without using a machine at the site, it is possible to utilize the machine for other work without occupying the machine for adjustment work of the machining conditions. Since the machining conditions can be adjusted even in a laboratory of a manufacturer or the like, if the user even updates the simulation model, a technician of the manufacturer does not have to go on a business trip to the site of the user to perform adjustment. In addition, by making the calculation resource used for the simulation fast, it is possible to adjust the machining conditions in a much shorter period of time than performing actual machining. In the simulation, it is also possible to evaluate a machining condition with which actual machining can not be performed due to the specifications of the actual machine. Therefore, since it is also possible to perform simulation on machining conditions for which a range or combination is not assumed, it is possible to evaluate machining conditions outside machine specifications or machining conditions that cannot be conceived by a person, and this can be a guideline for specification improvement and new research and development of machines.

Although one embodiment of the present invention has been described above, the present invention is not limited to only the example of the embodiment described above and can be implemented in various aspects by adding appropriate changes.

Reference Signs List

| 1 | machining condition adjustment device |
| 5 | network |
| 6 | fog computer |
| 7 | cloud server |
| 8 | wire electric discharge machine |
| 11 | CPU |
| 12 | ROM |
| 13 | RAM |
| 14 | nonvolatile memory |
| 15, 17, 18, 20, 21 | interface |
| 22 | bus |
| 70 | display device |
| 71 | input device |
| 72 | external device |
| 100 | simulation unit |
| 110 | machining state calculation unit |
| 112 | calculation model update unit |
| 120 | machining condition update unit |
| 200 | machining information storage unit |
| 210 | reference value storage unit |
| 2 | machine learner |
| 201 | processor |
| 202 | ROM |
| 203 | RAM |
| 204 | nonvolatile memory |
| 205 | machining condition prediction unit |
| 206 | learning unit |
| 207 | reward calculation unit |
| 208 | estimation unit |
| 209 | model storage unit |

## Claims

1. A machining condition adjustment device that adjusts a machining condition in a wire electric discharge machine, the machining condition adjustment device comprising:

    a machining information storage unit that stores data related to a machining content and data related to required specifications;

    a reference value storage unit that stores, as a reference value, a machining state corresponding to the machining content and the required specification stored in the machining information storage unit and a reference condition that is a predetermined machining condition;

    a simulation unit that performs a simulation of the wire electric discharge machine based on the machining content and the required specification stored in the machining information storage unit and the predetermined machining condition;

    a calculation model update unit that updates a calculation model of the simulation unit by inputting a machining state when predetermined machining is performed as a parameter;

    a machining state calculation unit that calculates a machining state in the simulation based on a result of the simulation by the simulation unit;

    a model storage unit that stores a model obtained by learning, by machine learning, an adjustment action of a predetermined machining state suitable for bringing the machining state close to the reference value in the machining state;

    a machining condition prediction unit that predicts an adjustment action of a machining state using the model stored in the model storage unit based on the machining state calculated by the machining state calculation unit; and

    a machining condition update unit that adjusts the machining condition to be used for simulation processing by the simulation unit based on the adjustment action of the machining state predicted by the machining condition prediction unit.

2. The machining condition adjustment device according to claim 1, wherein the machine learning is reinforcement learning.

# FIG. 1

## FIG. 2

**INTERNATIONAL SEARCH REPORT**

| International application No. |
| --- |
| **PCT/JP2022/014821** |

**A. CLASSIFICATION OF SUBJECT MATTER**

**B23H 7/02**(2006.01)i; **G06N 20/00**(2019.01)i
FI: B23H7/02 R; G06N20/00

According to International Patent Classification (IPC) or to both national classification and IPC

**B. FIELDS SEARCHED**

Minimum documentation searched (classification system followed by classification symbols)

B23H7/02; G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2019-101680 A (MITSUBISHI HEAVY IND MACHINE TOOL CO LTD) 24 June 2019 (2019-06-24) paragraphs [0022]-[0038], [0055], [0063], [0066] | 1-2 |
| Y | JP 2017-100203 A (FANUC LTD) 08 June 2017 (2017-06-08) paragraphs [0020]-[0028] | 1-2 |
| A | JP 2017-42882 A (FANUC LTD) 02 March 2017 (2017-03-02) entire text, all drawings | 1-2 |
| A | JP 4-354653 A (MITSUBISHI ELECTRIC CORP) 09 December 1992 (1992-12-09) entire text, all drawings | 1-2 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 May 2022** | **07 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/014821**

| Patent document cited in search report | | | Publication date (day/month/year) | Patent family member(s) | | | Publication date (day/month/year) |
|---|---|---|---|---|---|---|---|
| JP | 2019-101680 | A | 24 June 2019 | US paragraphs [0031]-[0062], [0084], [0093], [0099] | 2020/0293021 | A1 | |
| | | | | DE | 112018005809 | T5 | |
| | | | | CN | 111226179 | A | |
| JP | 2017-100203 | A | 08 June 2017 | US paragraphs [0038]-[0052] | 2017/0151618 | A1 | |
| | | | | EP | 3173171 | A1 | |
| | | | | CN | 106814698 | A | |
| JP | 2017-42882 | A | 02 March 2017 | US entire text, all drawings | 2017/0060105 | A1 | |
| | | | | EP | 3135417 | A1 | |
| | | | | CN | 106475645 | A | |
| | | | | KR | 10-2017-0026195 | A | |
| JP | 4-354653 | A | 09 December 1992 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017042882 A

- JP 2002160127 A

**Non-patent literature cited in the description**

- **KUNIEDA MASANORI.** Simulation of Electrical Discharge Machining. *Journal of The Japan Society for Precision Engineering,* 2010, vol. 76 (8), 861-866